# EUROPEAN PATENT APPLICATION

(11) **EP 1 693 554 A1**
(43) Date of publication of application: **23.08.2006**
(21) Application number: 04818227.3
(22) Date of filing: 08.11.2004
(51) Int. Cl.: F01N 3/02, B01D 39/14, B01D 53/92, B01J 35/04

(54) **CERAMIC HONEYCOMB FILTER, EXHAUST GAS-PURIFYING DEVICE, AND EXHAUST GAS-PURIFYING METHOD**

(30) Priority: 06.11.2003 JP 2003377156
(71) Applicant: HITACHI METALS, LTD., Minato-ku, Tokyo 105-8614 (JP); Hino Motors, Ltd., Hino-shi, Tokyo 191-8660 (JP)
(72) Inventor: SUWABE, Hirohisa, Moka-shi, Tochigi 321-4338 (JP); WATANABE, Kazutoyo, Kitakyusyu-shi, Fukuoka 800-0234 (JP); SUGIHARA, Hiroyuki, Hachioji-shi, Tokyo 192-0051 (JP); TAKAKURA, Takashi, Hachioji-shi, Tokyo 193-0801 (JP); NAKAGOME, Keiichi, Machida-shi, Tokyo 194-0012 (JP)
(74) Representative: Strehl Schübel-Hopf & Partner
(86) International application number: PCT/JP2004/016555
(87) International publication number: WO 2005/045207

(57) **Abstract**

A ceramic honeycomb filter comprising pluralities of porous ceramic honeycomb structures 1A, 1B each having large numbers of flow paths 41, 42, 43 partitioned by cell walls 30, which are connected to each other in a flow path direction, desired flow paths being sealed such that an exhaust gas passes through pores of the cell walls 30, the cell walls 31 of at least one honeycomb structure 1A being connected by plugs 50 to the cell walls 32 of a honeycomb structure 1B adjacent thereto with a gap 54 in the flow path direction, and a catalyst being carried by at least part of the cell walls 30 and/or the plugs 50, 52, an exhaust gas-cleaning apparatus comprising the ceramic honeycomb filter and a fuel-adding means disposed upstream thereof, and an exhaust gas-cleaning method using the ceramic honeycomb filter.

## Description

### FIELD OF THE INVENTION

The present invention relates to a ceramic honeycomb filter suitable for an apparatus for removing particulate matter from an exhaust gas discharged from a diesel engine, an exhaust gas-cleaning apparatus having such a ceramic honeycomb filter, and an exhaust gas-cleaning method.

### BACKGROUND OF THE INVENTION

To remove carbon-based particulate matter from an exhaust gas discharged from diesel engines, ceramic honeycomb filters comprising ceramic honeycomb structures with pluralities of flow paths alternately sealed at both ends (hereinafter referred to simply as "honeycomb filters") have recently been put into practical use.

The honeycomb filter usually comprises a porous ceramic honeycomb structure comprising a peripheral wall, and cell walls inside this peripheral wall for defining large numbers of flow paths (hereinafter referred to simply as "honeycomb structure"). Large numbers of flow paths are alternately sealed at ends on the exhaust gas inlet and outlet sides. An exhaust gas flowing into the honeycomb filter through flow paths open at the inlet-side ends passes through the pores of the cell walls and enters into the adjacent flow paths, and exits from the outlet-side ends. When the exhaust gas passes through the cell walls, particulate matter contained in the exhaust gas is captured in pores formed mostly in the cell walls, thereby cleaning the exhaust gas.

When the amount of particulate matter captured in pores reaches a predetermined level or more, the pores are clogged, resulting in increased pressure loss of the honeycomb filter and thus engine power decrease. Accordingly, the captured particulate matter is periodically burned by a burner or an electric heater to regenerate the honeycomb filter.

In the regeneration of the honeycomb filter, the more particulate matter is captured, the more difficult it is to uniformly control the temperature inside the honeycomb filter. A honeycomb filter tends to be subjected to larger temperature elevation particularly in portions in which particulate matter is accumulated at a higher concentration, thus vulnerable to breakage by thermal stress generated by the burning of particulate matter. In some cases, the temperature of a honeycomb filter is elevated to the melting temperature of a ceramic material or higher, causing meltdown in cell walls. When the highest temperature of the honeycomb filter during regeneration is low enough to prevent breakage and meltdown, some particulate matter remains unburned, failing to sufficiently reduce the pressure loss of the honeycomb filter even after the regeneration treatment.

To solve such problems in connection with the regeneration of the honeycomb filter, JP3-68210B discloses an exhaust-gas-cleaning structure comprising a honeycomb structure having alternately closed openings at both ends, and a heating means disposed on the exhaust gas inlet side of the cells of the honeycomb structure, space being provided between exhaust-gas-inlet-side plugs and exhaust-gas-inlet-side ends. JP3-68210B describes that in this exhaust-gas-cleaning structure, particulate matter is attached not only to cell walls but also to the space between the plugs and the exhaust-gas-inlet-side ends, and heat generated by the burning of particulate matter is conveyed downward while flowing into adjacent cells, thereby burning particulate matter attached to the cell walls. However, because the heating means is arranged only on the inlet side of the cells, it is difficult to uniformly control the temperature of a honeycomb filter long in a flow path direction from the inlet side to the outlet side. When a large amount of particulate matter is captured, the heat generation of particulate matter locally elevates the temperature of a honeycomb filter, resulting in breakage and meltdown.

JP7-106290B discloses a particulate filter for a diesel exhaust gas, which lowers the burning-start temperature of particulate matter by the action of a catalyst carried on cell wall surfaces and comprising a platinum-group metal and an alkaline earth metal oxide, and continuously removes the particulate matter by burning. JP7-106290B describes that this particulate filter for a diesel exhaust gas can be continuously regenerated at such low temperatures that are obtained by the operation of a diesel engine, thereby preventing clogging with particulate matter. However, even this particulate filter for a diesel exhaust gas fails to prevent pressure loss increase by clogging with particulate matter in some cases. This appears to be due to the fact that particularly when diesel cars are trapped in congestion in large cities, driving continues in a state where catalysts carried by filters are at temperatures lower than about 300°C, the lower limit of catalyst-activating temperatures, so that particulate matter is not sufficiently burned.

JP2002-122015A discloses an exhaust gas-cleaning method comprising determining the amount of particulate matter accumulated in a catalyst-carrying filter depending on the operation state of a diesel engine, injecting a fuel in an unburned state upstream of the filter to accelerate the oxidation reaction of the fuel on the catalyst, maintaining the temperature inside the filter at the lower limit of a catalyst-activating temperature or higher by the reaction heat of particulate matter, thereby burning the accumulated particulate matter. JP2002-122015A describes that this exhaust gas-cleaning method can maintain the catalyst in an active state regardless of the operation state of a diesel engine to efficiently burn particulate matter captured by the filter. However, when a fuel supplied in an unburned state is not sufficiently reacted in this exhaust gas-cleaning method, the particulate matter cannot be fully burned, resulting in premature pressure loss increase by clogging with particulate matter, and thus failing to continue using the filter.

To carry out the regeneration of a honeycomb filter easily while solving the above problems, the applicant previously filed a ceramic honeycomb filter comprising a porous ceramic honeycomb structure with flow paths sealed with plugs such that an exhaust gas passes through pores in the cell walls of the honeycomb structure, a catalyst being carried by at least part of the cell walls and/or the plugs, and at least one exhaust gas inlet-side plug being separate from the exhaust-gas-inlet-side end (Japanese Patent Application No. 2003-93677).

In this ceramic honeycomb filter, a diesel engine fuel and/or another fuel (hydrocarbons, etc.) in an unburned state are injected upstream of the honeycomb filter, and burned by the action of the catalyst carried by the cell walls and the plugs of the honeycomb filter. With the fuel burned, the catalyst carried by the honeycomb filter can be kept at the lower limit of a catalyst-activation temperature or higher, even if an exhaust gas is discharged from an internal engine at low temperatures. Accordingly, particulate matter in the exhaust gas can be sufficiently removed, preventing the breakage and meltdown of the filter, and stably suppressing pressure loss increase for a long period of time.

In this honeycomb filter, however, the exhaust gas temperature is elevated rapidly near the inlet-side plugs whenever the fuel is injected, so that the inlet-side plugs are likely to be broken when used for a long period of time. This phenomenon presumably occurs due to the fact that tensile stress is generated in the inlet-side plugs, because the cell walls in direct contact with a high-temperature exhaust gas flowing through the flow paths are thermally expanded, while the plugs having relatively large thermal capacity are more slowly subjected to thermal expansion than the cell walls.

### OBJECTS OF THE INVENTION

Accordingly, an object of the present invention is to provide a honeycomb filter regeneratable by continuously burning particulate matter in an exhaust gas by the action of a catalyst carried thereby, to surely prevent pressure loss increase by the accumulation of particulate matter in its pores and avoid the breakage of the filter, so that it can be used stably for a long period of time.

Another object of the present invention is to provide an exhaust gas-cleaning apparatus comprising a honeycomb filter, and a means for adding a fuel to burn particulate matter contained in an exhaust gas, the honeycomb filter being unlikely to be broken.

A further object of the present invention is to provide a method for cleaning an exhaust gas while preventing the clogging of a honeycomb filter and thus pressure loss increase without breakage of a honeycomb filter.

### DISCLOSURE OF THE INVENTION

As a result of intensive research in view of the above objects, the inventors have found that in a catalyst-carrying ceramic honeycomb filter constituted by pluralities of porous ceramic honeycomb structures connected in a flow path direction, desired flow paths being sealed, the arrangement of a gap between the connected porous ceramic honeycomb structures serves to prevent the honeycomb filter from being broken by thermal expansion when particulate matter accumulated in the cell walls is burned. The present invention has been completed based on such findings.

Thus, the ceramic honeycomb filter of the present invention comprises pluralities of porous ceramic honeycomb structures each having large numbers of flow paths partitioned by cell walls, which are connected to each other in a flow path direction, desired flow paths being sealed such that an exhaust gas passes through pores in the cell walls, the cell walls of at least one honeycomb structure being connected by plugs to those of a honeycomb structure adjacent thereto with a gap in the flow path direction, and a catalyst being carried by at least part of the cell walls and/or the plugs.

The gap is preferably 0.1-10 mm. The catalyst is preferably carried by the cell walls of the porous ceramic honeycomb structure at least on the exhaust gas inlet side from the plugs. Catalysts having different properties are preferably carried by the cell walls on the exhaust gas inlet side from the plugs, and by the cell walls on the exhaust gas outlet side.

The ends of the plugs connecting pluralities of the porous ceramic honeycomb structures are preferably located in a region 0.5 times or less as long as the total length of the ceramic honeycomb filter from the inlet end of the ceramic honeycomb filter.

The exhaust gas-cleaning apparatus of the present invention comprises (a) a ceramic honeycomb filter comprising pluralities of porous ceramic honeycomb structures each having large numbers of flow paths partitioned by cell walls, which are connected to each other in a flow path direction, desired flow paths being sealed such that an exhaust gas passes through pores in the cell walls, the cell walls of at least one honeycomb structure being connected by plugs to those of a honeycomb structure adjacent thereto with a gap in the flow path direction, and a catalyst being carried by at least part of the cell walls and/or the plugs, and (b) a fuel-adding means disposed upstream of the ceramic honeycomb filter.

The method of the present invention for cleaning an exhaust gas uses a ceramic honeycomb filter having large numbers of flow paths partitioned by cell walls, through which the exhaust gas is caused to flow, the cell walls of at least one honeycomb structure in the ceramic honeycomb filter being connected by plugs to those of a honeycomb structure adjacent thereto with a gap in the flow path direction, desired flow paths being sealed, a catalyst being carried by at least part of the cell walls and/or the plugs, comprising adding a fuel to the exhaust gas on the upstream side of the ceramic honeycomb filter, such that plugs in the ceramic honeycomb filter, and at least part of a porous ceramic honeycomb structure on the exhaust gas outlet side from the plugs are subjected to the lower limit of a temperature activating the catalyst or higher.

### BRIEF DESCRIPTION OF THE DRAWINGS

Fig. 1 is a schematic cross-sectional view showing an example of the ceramic honeycomb filter of the present invention.

Fig. 2 is a graph schematically showing temperature variation in the longitudinal direction of another example of the ceramic honeycomb filter of the present invention depicted by a schematic cross-sectional view.

Fig. 3(a) is a schematic cross-sectional view showing a further example of the ceramic honeycomb filter of the present invention.

Fig. 3(b) is a schematic cross-sectional view showing a still further example of the ceramic honeycomb filter of the present invention.

Fig. 3(c) is a schematic cross-sectional view showing a still further example of the ceramic honeycomb filter of the present invention.

Fig. 4 is a schematic cross-sectional view showing the production steps of the ceramic honeycomb filter of the present invention.

Fig. 5 is a schematic cross-sectional view showing an example of the exhaust gas-cleaning apparatus of the present invention.

Fig. 6 is a schematic cross-sectional view showing the ceramic honeycomb filter of Comparative Example 1.

Fig. 7 is a schematic cross-sectional view showing the ceramic honeycomb filter of Comparative Examples 2-6.

### DESCRIPTION OF THE PREFERRED EMBODIMENTS

[1] Ceramic honeycomb filter

(1) Structure of ceramic honeycomb filter

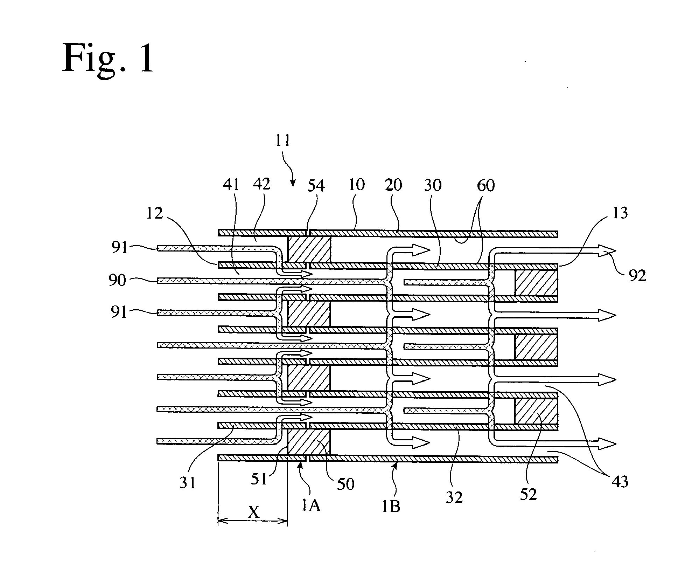

Fig. 1 is a schematic cross-sectional view showing an example of the ceramic honeycomb filter of the present invention. The ceramic honeycomb filter comprises a first ceramic honeycomb structure1A, a second ceramic honeycomb structure1B, inlet-side plugs 50 coaxially connecting the honeycomb structures 1A and 1B and sealing flow paths 42 in the honeycomb structures 1A, 1B, and outlet-side plugs 52 sealing the other end of the honeycomb structure 1B.

Each honeycomb structure 1A, 1B has a substantially circular or elliptical cross section perpendicular to the flow path direction. Each honeycomb structure 1A, 1B comprises a peripheral wall 20, and pluralities of cell walls 30 formed inside the peripheral wall 20 for defining pluralities of flow paths 41, 42 and 43. The flow paths 41, 42, 43 are alternately sealed by plugs 50, 52.

The honeycomb structure 1A has an open end 12 on the exhaust gas inlet side. The exhaust-gas-outlet-side end of the honeycomb structure 1A is connected to the exhaust-gas-inlet-side end of the honeycomb structure 1B by the plugs 50 formed in the flow paths 42, such that there is a gap 54 between them. The gap 54 is preferably 0.1-10 mm. When the honeycomb structures 1A and 1B are connected with the gap 54 of 0.1-10 mm, breakage is unlikely to occur in the honeycomb structures 1A, 1B and the plugs 50 even after thermal expansion. When the gap 54 is less than 0.1 mm, the gap 54 is likely to be filled with accumulated matter, resulting in substantially zero gap. When it is more than 10 mm, the plugs 50 directly exposed to a high-temperature exhaust gas has too large surface area, so that the plugs 50 are likely to be broken, because there is too large difference in thermal expansion between the surface and inside of the plug 50, and/or because the plug 50 is too long in the flow path direction as compared with its cross section area. The width of the gap 54 is more preferably 0.5-5 mm, particularly 1-3 mm.

The distance X from the end 12 of honeycomb structure 1A to the end surfaces 51 of the plugs 50 is preferably 0.5 times or less the length, in the flow path direction, of the honeycomb filter formed by bonding the honeycomb structures 1A and 1B. When this distance X is more than 0.5 times, the cell walls 32 of the honeycomb structure 1B are smaller in surface area than the cell walls 31, so that the honeycomb filter is likely to have increased initial pressure loss. The distance X from the end 12 to the end surfaces 51 of the plugs 50 is preferably 1 mm or more. When the inlet-side end surfaces 51 of the plugs 50 are separate from the end 12 by 1 mm or more, a sufficient filter-temperature-elevating effect can be obtained by a fuel added to the exhaust gas upstream of the honeycomb filter in the presence of the catalyst carried by the honeycomb structure 1A. The inlet-side end surfaces 51 of the plugs 50 are preferably located in a region as long as 0.1-0.4 times the total length of the honeycomb filter 11 from the end 12 of the honeycomb structure 1A.

The catalyst is carried by the cell walls 30 and/or the plugs 50, 52. The honeycomb structure 1A and the honeycomb structure 1B may carry catalysts having different properties. The catalyst carried by the cell walls 30 and/or the plugs 50, 52 preferably contains a platinum-group metal. Examples of the catalysts containing platinum-group metals include Pt, Pd, Ru, Rh and combinations thereof, and oxides of platinum-group metals. Alkaline earth metal oxides, rare earth oxides, etc. may also be contained. When the catalyst such as Pt, etc. is carried by a high-specific-surface-area material such as active alumina, for instance, γ-alumina, etc., the catalyst preferably has a large contact area with the exhaust gas, resulting in increased efficiency of cleaning the exhaust gas.

The honeycomb structure 1A and the honeycomb structure 1B may carry catalysts having different properties. Also, different amounts of the catalyst may be carried by the honeycomb structures 1A and 1B. For instance, it is preferable that (a) a platinum-group metal is carried at a high concentration by the cell walls 31 on the exhaust gas inlet side to accelerate the oxidation reaction of a fuel in the honeycomb structure 1A, and that (b) a platinum-group metal is carried at a lower concentration by the cell walls 32 on the exhaust gas outlet side.

A catalyst for accelerating the oxidation reaction of a fuel may be carried by the cell walls 31 of the honeycomb structure 1A, and a catalyst (cocatalyst) acceleratable the combustion reaction of particulate matter may be carried by the cell walls 32 of the honeycomb structure 1B. With such arrangement of catalysts, the oxidation reaction of a fuel is accelerated in the honeycomb structure 1A, and heat generated by this reaction burns particulate matter accumulated in the cell walls 31 of the honeycomb structure 1A. The generated combustion heat is conveyed to the honeycomb structure 1B by the exhaust gas 90, 91, so that particulate matter is efficiently burned by the catalyst carried by the cell walls 32 of the honeycomb structure 1B. Thus, the clogging of the honeycomb structures 1A, 1B can be avoided by burning particulate matter by the action of the catalyst, thereby suppressing pressure loss for a long period of time.

Examples of the catalyst carried by the honeycomb structure 1A may be catalysts containing the above-described platinum-group metal, and examples of the catalyst carried by the honeycomb structure 1B may be catalysts for burning particulate matter at high temperatures, typically those comprising lanthanum, cesium and vanadium (La/Cs/V₂O₅).

The exhaust gas flows into the flow paths 41, 42 open on the inlet-side end 12. Among them, a stream of the exhaust gas 91 flowing into the flow paths 42 is deflected by the inlet-side plugs 50, passing through pores (not shown) in the cell walls 31 and flowing into the adjacent flow paths 41. The gas flowing into the flow paths 41 proceeds toward the outlet-side end 13 together with the exhaust gas 90 flowing from the inlet-side end 12. Because the flow paths 41 are sealed on the outlet-side end 13, the gas 92 passes through pores (not shown) in the cell walls 32 and enters into the adjacent flow paths 43, and then exits from the opening ends of the flow paths 43. Because particulate matter in the exhaust gas passes through the cell walls 31 and/or 32 between the inlet-side end 12 and the outlet-side end 13, it is captured by pores (not shown) in the cell walls 31, 32. Accordingly, the gas 92 is clean.

The honeycomb filter disposed in an exhaust-gas-treating apparatus for an internal engine preferably has such structure that a fuel can be added to the exhaust gas upstream of the filter to remove particulate matter, when the amount of particulate matter accumulated in the honeycomb filter becomes a predetermined level or more during the operation of the internal engine.

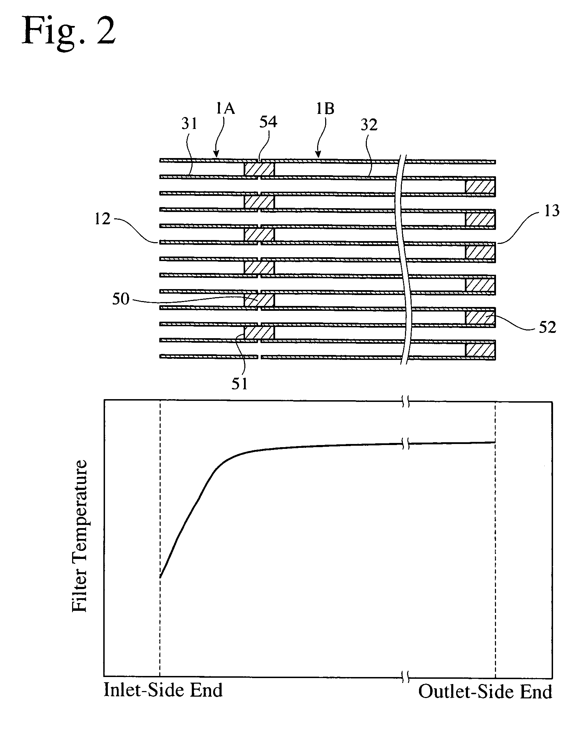

Fig. 2 is a graph schematically showing the internal temperature of a honeycomb filter in its regeneration step. The fuel added upstream of the honeycomb filter is oxidized by the action of the catalyst carried by the cell walls 31 of the honeycomb structure 1A to generate heat. Accordingly, the temperature in the honeycomb structure 1A is higher on the downstream side. Heat generated in the honeycomb structure 1A burns particulate matter accumulated upstream of the inlet-side plugs 50. Combustion heat flows downstream together with the exhaust gas 90, 91, so that it is conveyed to the honeycomb structure 1B to burn particulate matter accumulated in the honeycomb structure 1B. Though combustion heat conveyed to the honeycomb structure 1B may not be enough to burn the particulate matter, the temperature in the honeycomb structure 1B is elevated to the lower limit of a temperature activating the catalyst carried at least by the cell walls 32 or higher, so that particulate matter captured in the pores of the cell walls 32 is burned.

There is the gap 54 between the honeycomb structures 1A and 1B as described above. Accordingly, even though the cell walls 31, 32 are thermally expanded by direct contact with a high-temperature exhaust gas flowing through the flow paths, only small tensile stress is generated in the plugs 50, resulting in less likelihood of the breakage of the plugs 50. It is thus possible to burn particulate matter captured in the pores of the cell walls 31, 32, thereby preventing the pressure loss from increasing, while avoiding the breakage and meltdown of the honeycomb filter.

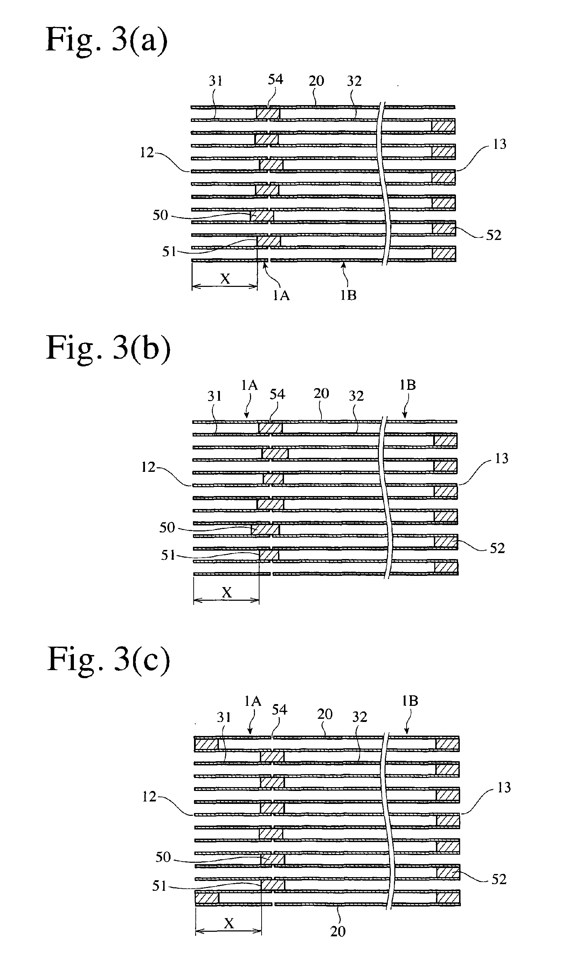

Figs. 3(a)-(c) show other examples of the ceramic honeycomb filters of the present invention. In the honeycomb filter shown in Fig. 3(a), there are uneven distances X from the end 12 of the honeycomb structure 1A to the end surfaces 51 of the plugs 50. In the honeycomb filter shown in Fig. 3(b), the honeycomb structure 1A is connected to the honeycomb structure 1B with different-length plugs 50 and with different distances X. Thus, as long as the temperature of the supplied fuel can be fully elevated in the honeycomb structure 1A, pluralities of plugs 50 are not particularly restrictive in position and length.

As shown in Fig. 3(c), the honeycomb structure 1A may have plugs 50 in outermost flow paths at the exhaust gas inlet-side end. In the honeycomb filter having such structure, substantially no exhaust gas flows into the outermost flow paths. Accordingly, the outermost flow paths act as a heat-insulating space, preventing heat generated in the honeycomb filter from being transmitted outside. As a result, a uniform temperature can easily be kept in the honeycomb filter.

(2) Production method of ceramic honeycomb filter

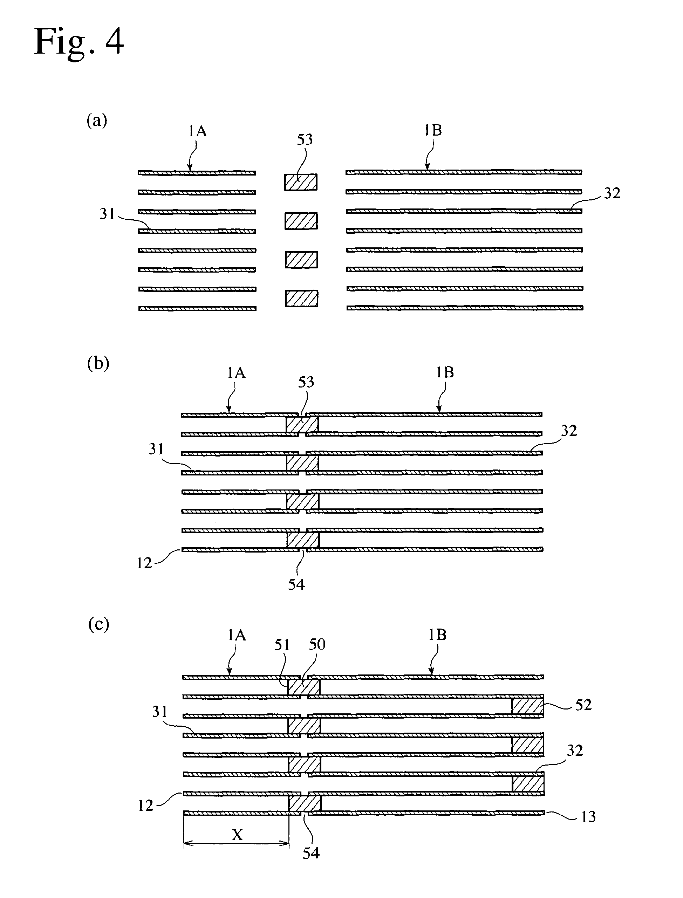

Referring to Fig. 4, an example of the production method of the ceramic honeycomb filter will be explained.

(i) Honeycomb structure

A honeycomb structure 1A having cell walls 31 and a honeycomb structure 1B having cell walls 32 are prepared. In this example, the cell walls of the honeycomb structures 1A and 1B have the same thickness and pitch.

The cell walls 31, 32 of the honeycomb structures 1A, 1B preferably have a porosity of 50-80%. When the porosity of the cell walls 31, 32 is less than 50%, the honeycomb filter suffers too much pressure loss, resulting in too much reduction of engine power. When the porosity of the cell walls 31, 32 is more than 80%, the cell walls 31, 32 have such small strength that the honeycomb filter is likely to be broken by heat shock and mechanical vibration during operation. The porosity of the cell walls 31, 32 is more preferably 60-75%.

The cell walls 31, 32 are preferably as thick as 0.1-0.5 mm. When the cell walls are thinner than 0.1 mm, the honeycomb structure has too small strength. On the other hand, when the cell walls 31, 32 are thicker than 0.5 mm, the cell walls 31, 32 have too much resistance to an exhaust gas passing therethrough even with high porosity, resulting in providing the honeycomb filter with too large pressure loss. More preferably, the cell walls are as thick as 0.2-0.4 mm. The cell walls 31, 32 preferably have a pitch of 1.2 mm or more and less than 3 mm. When the pitch of the cell walls 31, 32 is less than 1.2 mm, the honeycomb structure has a too small inlet opening area, resulting in providing the honeycomb filter inlet with too large pressure loss. When the pitch is 3 mm or more, the cell walls have too small surface area, resulting in providing the honeycomb filter with too large pressure loss. The more preferred pitch of the cell walls 31, 32 is 1.3 mm or more and less than 2 mm.

The contact length of the plugs 50 and the cell walls 30, 32 in the flow path direction is preferably 2-10 mm. When the contact length is less than 2 mm, the contact area of the plugs 50 and the cell walls 32 is inevitably small, so that the plugs 50 are easily detached by the pressure of an exhaust gas. When the contact length is more than 10 mm, the contact region is too much expanded thermally in a flow direction, resulting in too large tensile stress generated in the plugs 50.

The honeycomb structure is preferably made of materials having excellent heat resistance. The honeycomb filter made of materials having excellent heat resistance is suitable as a filter for removing particulate matter from an exhaust gas discharged from diesel engines. Specifically, ceramic materials comprising as a main component at least one selected from the group consisting of cordierite, alumina, mullite, silicon nitride, carbon nitride and LAS are usable. Among them, a cordierite-based ceramic honeycomb filter is most preferable because of a reasonable price, excellent heat resistance and corrosion resistance, and a low thermal expansion.

(ii) Plugging

A plastic material 53 is charged into end portions of the flow paths of the honeycomb structures 1A and 1B in a checkerboard pattern, so that the plastic material 53 can integrally connect the honeycomb structures 1A and 1B as shown in Fig. 4(b). In this case, a gap 54 is provided between the honeycomb structures 1A and 1B so that they are not in contact. The preferred plugging material are the same as the materials for the honeycomb structure.

A resin film is attached to the end 13 of the honeycomb structure 1B, which does not face the honeycomb structure 1A, and provided with apertures in alignment with flow paths with no plastic material 53 charged. Thereafter, a slurry containing a plugging material is charged into the end portions of the flow paths of the honeycomb structure 1B, on which the resin film is open, to form plugs 52.

Water in the slurry is absorbed in the cell walls of the honeycomb structure 1B, so that the plugging material is bonded to the cell walls. After the plugging material gets enough shape retention by solidification, an unsolidified slurry is withdrawn, the resin film is removed, and the solidified plugging material is dried. After drying, the plugs 50, 52 are sintered, so that they become integral with the cell walls 31, 32.

While integrating the honeycomb structures 1A and 1B, the gap 54 should not be filled with a plugging material. When the gap 54 is filled with the plugs 50, etc., the honeycomb filter acts as if there were no gap between the honeycomb structures 1A and 1B, resulting in tensile stress generated in the plugs 50, 52 and thus insufficient effect of the present invention.

A peripheral wall 20 may be formed (a) by integrally connecting the honeycomb structures 1A and 1B and then coating peripheral surfaces of the integrated honeycomb structures 1A and 1B with a ceramic coating material, or (b) by removing a peripheral portion from each honeycomb structure 1A, 1B to provide the honeycomb structure 1A, 1B with longitudinal grooves on its peripheral surface, integrally connecting them, and filling the grooves with a ceramic coating material. Alternatively, a peripheral wall may be produced by (c) removing a peripheral portion from each honeycomb structure in the stage of a molding, sintering the worked honeycomb structure to provide it with longitudinal grooves on a peripheral surface, integrally connecting both honeycomb structures, and further embedding a ceramic coating material in the grooves. The ceramic coating material is preferably composed of the same ceramic particles as for the honeycomb structures, and an inorganic binder such as colloidal oxides, etc. The ceramic coating material having such composition can become integral with the honeycomb structures with least problems such as peeling, etc. due to the difference in materials properties such as thermal expansion, etc. between the coating material and the honeycomb structures.

(iii) Carrying catalyst

A structure formed by integrally connecting the honeycomb structures 1A and 1B is immersed in a catalyst-containing slurry. After immersion, the integral structure is dried and sintered, so that the catalyst is attached to the surfaces and pores of the cell walls 31, 32.

When different catalysts are carried by the honeycomb structures 1A and 1B, it is preferable that only the honeycomb structure 1A is immersed in a slurry for the honeycomb structure 1A with the end 12 downward, and that only the honeycomb structure 1B is immersed in a slurry for the honeycomb structure 1B with the end 13 downward.

Because there is a gap 54 between the honeycomb structures 1A and 1B, the catalysts can surely be coated separately on them. That is, the gap 54 can prevent the catalyst to be carried by the honeycomb structure 1A from being attached to the honeycomb structure 1B. Because the catalyst for the honeycomb structure 1A is expensive, the provision of the gap 54 is economically advantageous.

[2] Exhaust gas apparatus

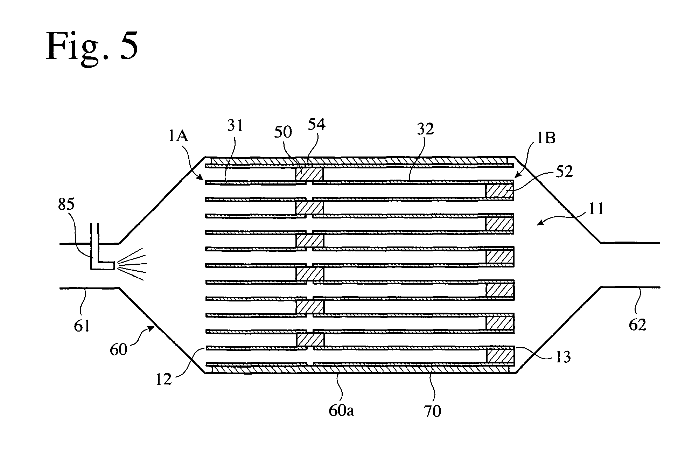

Fig. 5 is a cross-sectional view schematically showing the exhaust gas apparatus of the present invention. This exhaust gas apparatus comprises a cylindrical shell 60, a ceramic honeycomb filter 11 contained in the shell 60 such that its flow paths are in alignment with the longitudinal direction of the shell 60, and a fuel-adding means 85 arranged upstream of the ceramic honeycomb filter 11.

The shell 60 comprises a cylindrical body portion 60a, and end portions each having a smaller diameter than that of the body portion 60a and extending from the body portion 60a. One end portion of the shell 60 serves as an exhaust gas inlet 61, and the other end portion of the shell 60 serves as an exhaust gas outlet 62.

The honeycomb filter 11 is disposed in the body portion 60a of the shell 60, with the honeycomb structure 1A on the side of the inlet 61 and the honeycomb structure 1B on the side of the outlet 62. There is a heat insulator 70 between the shell 60 and the honeycomb filter 11.

The fuel-adding means 85 is open in the inlet 61, such that it adds a fuel to the exhaust gas flowing into the shell 60 from the side of the end 12 of the honeycomb structure 1A. The fuel to be added may be the same as or different from an internal engine fuel. An example of the internal engine fuel is gas oil. Other fuels than the internal engine fuel include hydrocarbons.

The exhaust gas flows into the inlet 61, passes through the flow paths of the honeycomb structures 1A and 1B and flows out of the outlet 62. Because of the plugs 50, 52 disposed in the end portions of the honeycomb structures 1A and 1B, the exhaust gas should pass through the cell walls 31, 32 and/or the plugs 50, 52. Accordingly, while passing through the cell walls 31, 32 and/or the plugs 50, 52, particulate matter contained in the exhaust gas is captured in their pores.

When a predetermined amount of particulate matter or more is accumulated in the honeycomb filter 11 during the operation of an internal engine, the fuel-adding means 85 supplies a fuel into the shell 60. The oxidation catalyst such as platinum, etc. carried by the cell walls 31 of the honeycomb structure 1A causes an exothermal oxidation reaction of a fuel, thereby elevating the temperature of the exhaust gas. The heated exhaust gas entering into the honeycomb structure 1B burns particulate matter captured in pores of the cell walls 32 of the honeycomb structure 1B. Thus, the reaction of the fuel in the presence of the catalyst efficiently burns particulate matter, thereby preventing the accumulated particulate matter from clogging the pores of the cell walls, and thus making pressure loss increase unlikely.
Accordingly, the pressure loss of the honeycomb filter is prevented from increasing for a long period of time.

Because of the gap 54 therebetween, the honeycomb structures 1A and 1B are less likely to be broken by contact with each other even if their cell walls are thermally expanded by a high-temperature exhaust gas flowing through the flow paths. Also, because of relatively small tensile stress generated in the plugs 50, the plugs 50, 52 and the cell walls 31, 32 are less likely to be broken by heat shock immediately after the operation start and the addition of a fuel, making it possible to use the honeycomb filter stably for a long period of time.

[3] Exhaust gas-cleaning method

In the exhaust gas-cleaning method of the present invention, when a predetermined amount of particulate matter or more is accumulated in the honeycomb filter, a fuel is added to the exhaust gas upstream of the honeycomb filter. The added fuel is oxidized in the presence of the catalyst carried by the cell walls 31 of the honeycomb structure 1A, generating a reaction heat, which elevates the temperature of the exhaust gas. Because the heated exhaust gas passes through the cell walls 31 and/or the plugs 50 and flows into the honeycomb structure 1B, the exhaust gas at a high temperature is brought into contact with the cell walls 32 of the honeycomb structure 1B, thereby elevating the temperature inside the honeycomb structure 1B to the lower limit of a temperature for activation the catalyst carried by the cell walls 32, etc. or higher. The catalyst thus activated acts to burn particulate matter in the exhaust gas, thereby preventing the clogging of the honeycomb filter and thus pressure loss increase.

The honeycomb filter used in the exhaust gas-cleaning method comprising the honeycomb structures 1A and 1B connected with a gap 54. Accordingly, even if the cell walls 31, 32 of the honeycomb structures 1A and 1B are thermally expanded by contact with a high-temperature exhaust gas, only small compression stress is generated in the flow path direction, resulting in small tensile stress generated in the plugs. Thus, even with heat shock immediately after the operation start or the addition of a fuel, the cell walls 31, 32 are unlikely to be broken, making it possible to stably clean an exhaust gas for a long period of time.

The present invention will be explained in more detail referring to Examples below without intention of restricting the scope of the present invention.

Examples 1-5

The powder composition of kaolin, talc, silica, aluminum hydroxide, alumina, etc. was prepared to obtain a cordierite-forming powder comprising, on a mass basis, 47-53% of SiO₂, 32-38% of Al₂O₃, 12-16% of MgO, and 2.5% or less in total of inevitable components (CaO, Na₂O, K₂O, TiO₂, Fe₂O₃, PbO, P₂O₅, etc.), and fully mixed with a molding aid, a pore-forming agent, and a predetermined amount of water to prepare a material extrusion-moldable to a honeycomb structure. It was then extrusion-molded by a known extrusion die to produce a honeycomb structure molding comprising a peripheral wall 20, and cell walls 30 inside this peripheral wall 20 for defining flow paths each having a square cross section, which was then dried and sintered to obtain a honeycomb structure 1A with exhaust-gas-inlet-side cell walls 31 and a honeycomb structure 1B with exhaust-gas-outlet-side cell walls 32. Each honeycomb structure had a diameter of 267 mm with 0.3-mm-thick cell walls (porosity: 65%, pitch: 1.5 mm).

A plastic plugging material for forming exhaust-gas-inlet-side plugs 50 was charged into the flow paths of the honeycomb structures 1A and 1B through their ends in a checkerboard pattern to form the inlet-side plugs 50, by which the honeycomb structures 1A and 1B were integrally connected. At this time, a gap 54 was provided to keep the honeycomb structures 1A and 1B from contact with each other. A resin film was attached to the other end 13 of the honeycomb structure 1B, and provided with apertures alternately with the inlet-side plugs 50. A plugging material slurry was introduced into the flow paths through the apertures to fill the end portions of the flow paths of the honeycomb structure 1B. After the plugging material was solidified, the resin film was removed. The plugging material was then dried and sintered to integrally connect the plugs to the cell walls, thereby obtaining honeycomb filters 11 having structures shown in Table 1 (Examples 1-5).

With respect to each honeycomb filter, the distance X (mm) between the exhaust gas inlet-side-end surfaces 51 of the plugs 50 and the end 12 of the honeycomb filter were measured. Specifically, a metal rod of about 0.8 mm in diameter and 300 mm in length was introduced into the honeycomb filter from the exhaust-gas-inlet-side end 12, and the length of a portion of the metal rod protruding from the honeycomb filter was measured. 20 flow paths were randomly selected in one honeycomb filter to measure the distance X, and the measured values were averaged.

With respect to the honeycomb filters of Examples 1-5, the distance X (mm) between the exhaust-gas-inlet-side end surfaces 51 and the end 12 of the honeycomb filter, and a ratio of X/(total length L of honeycomb filter) are shown in Table 1. The length of the gap 54 between the honeycomb structures 1A and 1B is also shown in Table 1.

A catalyst A comprising Pt, cerium oxide and active alumina (2g of Pt was carried by 1 L of the honeycomb filter, simply expressed as 2g/L of Pt) was carried by the surfaces of the cell walls 31, 32 and their pores and the surfaces of the plugs 50, 52 and their pores in each honeycomb filter.

Air was caused to flow at a flow rate of 7.5 Nm³/min into each honeycomb filter of Examples 1-5 set in a pressure loss test apparatus (not shown), to measure pressure difference between the inlet-side end 12 and the outlet-side end 13, thereby evaluating the initial pressure loss of each honeycomb filter. This initial pressure loss is expressed as a relative value, assuming that the initial pressure loss of the ceramic honeycomb filter of Comparative Example 1 described later is 1.

With each honeycomb filter of Examples 1-5 disposed in an exhaust pipe of a diesel engine, a durability test was conducted under pattern driving conditions simulating city road driving. During the durability test, there were time periods in which the operation continued at an exhaust gas temperature lower than the lower limit of a catalyst-activating temperature, so that particulate matter was slightly accumulated in the filter. The amount of particulate matter accumulated in the honeycomb filter was predicted depending on the operation state, and when the predicted amount became a predetermined level or higher, an unburned fuel was injected upstream of the filter to conduct the forced regeneration of the filter.

Evaluation was "Passed (Good)" when the test continued until it passed a time period corresponding to 10,000-km driving, and "Failed (Poor)" when the test did not continue. With respect to the honeycomb filters evaluated as "Passed," pressure loss was measured in the same manner as the initial pressure loss after the time period corresponding to 10,000-km driving passed, to calculate a ratio of the pressure loss after the test to the initial pressure loss.

Comparative Example 1

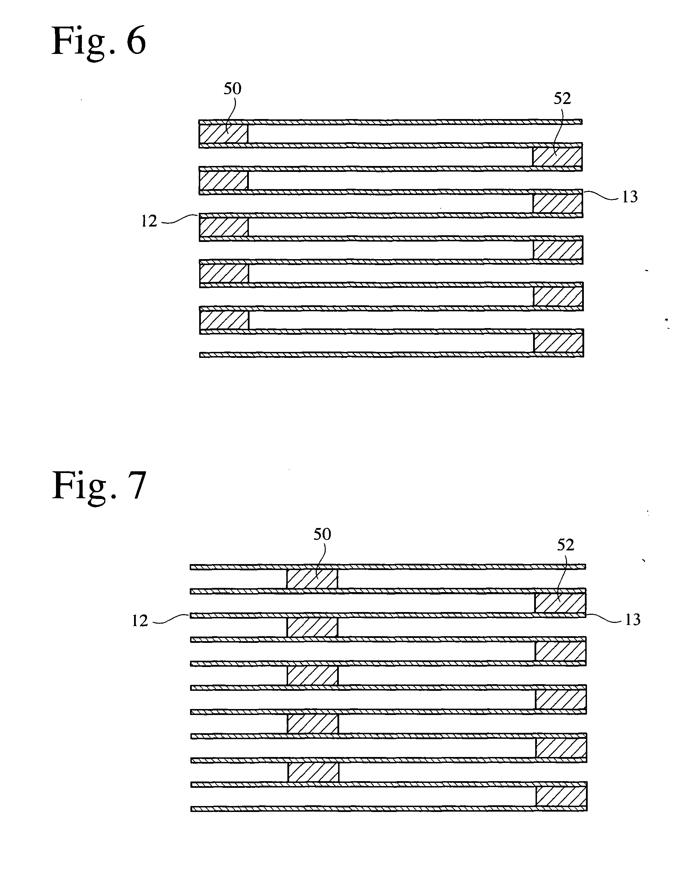

A honeycomb structure having a diameter of 267 mm and a total length of 304.8 mm, whose cell walls had a pitch of 1.5 mm, a thickness of 0.3 mm and a porosity of 65%, was produced in the same manner as in Examples 1-5. A masking film was attached to both ends of this honeycomb structure, and provided with apertures in a checkerboard pattern such that the flow paths are open alternately at both ends. A plugging material slurry was charged, dried and sintered to form plugs 52, thereby producing a honeycomb filter with plugs 50, 52 alternately at both ends as shown in Fig. 6.

Comparative Examples 2-6

A honeycomb structure having a diameter of 267 mm and a total length of 304.8 mm, whose cell walls had a pitch of 1.5 mm, a thickness of 0.3 mm and a porosity of 65%, was produced in the same manner as in Examples 1-5. The honeycomb structure was filled with a plugging material slurry in a checkerboard pattern at a position separate from the exhaust-gas-inlet-side end 12 to form inlet-side plugs 50. Outlet-side plugs 52 were formed at the exhaust gas outlet-side end 13 alternately with the inlet-side plugs 50. Thus, a honeycomb filter shown in Fig. 7 was obtained (Comparative Examples 2-6).

A catalyst A comprising Pt, cerium oxide and active alumina (Pt carried: 2g/L) was carried by the cell walls 30 and the plugs 50, 52 of each honeycomb filter in the same manner as in Examples 1-5. Thereafter, a pressure loss test and a durability test were conducted in the same manner as in Examples 1-5.

Example 6

A honeycomb structure 1A having a diameter of 267 mm and a total length of 96.4 mm, whose cell walls had a pitch of 1.5 mm, a thickness of 0.3 mm and a porosity of 65%, and a honeycomb structure 1B having a diameter of 267 mm and a total length of 208.3 mm, whose cell walls had a pitch of 1.5 mm, a thickness of 0.3 mm and a porosity of 65%, were produced in the same manner as in Example 2. With a slurry containing a plastic plugging material introduced into the end portions of the flow paths of the honeycomb structures 1A and 1B in a checkerboard pattern, the honeycomb structures 1A and 1B were integrally connected such that a 0.1-mm-wide gap 54 was provided between the cell walls of the honeycomb structures 1A and 1B.

A resin film was attached to the other end 13 of the honeycomb structure 1B, and provided with apertures alternately with the inlet-side plugs 50. A plugging material slurry was introduced into part of the flow paths of the honeycomb structure and solidified. Thereafter, the resin film was removed, and the plugs were dried and sintered to integrally bond the plugs to the cell walls, thereby integrally connecting the honeycomb structures 1A and 1B. After a catalyst A comprising Pt, cerium oxide and active alumina (Pt carried: 2g/L) was carried by the exhaust-gas-inlet-side cell walls 31 and the plugs 50 of this honeycomb filter, a pressure loss test and a durability test were conducted in the same manner as in Examples 1-5.

Comparative Example 7

A honeycomb structure having a diameter of 267 mm and a total length of 304.8 mm, whose cell walls had a pitch of 1.5 mm, a thickness of 0.3 mm and a porosity of 65%, was produced in the same manner as in Comparative Example 3. Plugs 50 were formed at positions 91.4 mm inward from the inlet-side end 12 of this honeycomb structure. After a catalyst A comprising Pt, cerium oxide and active alumina (Pt carried: 2g/L) was carried by the exhaust-gas-inlet-side cell walls 31, a durability test was conducted in the same manner as in Examples 1-5. The weight of the catalyst carried by the honeycomb filter is shown in Table 2 as a relative value to that in Example 6.

Example 7

A honeycomb structure 1A having a diameter of 267 mm and a total length of 96.9 mm, whose cell walls had a pitch of 1.5 mm, a thickness of 0.3 mm and a porosity of 65%, and a honeycomb structure 1B having a diameter of 267 mm and a total length of 206.9 mm, whose cell walls had a pitch of 1.5 mm, a thickness of 0.3 mm and a porosity of 65%, were produced in the same manner as in Example 2. These honeycomb structures were integrally connected by plugs 50 with a 1-mm gap 54, and plugs 52 were formed at the other end 13 of the honeycomb structure 1B alternately with the plugs 50.

Pt, cerium oxide and active alumina (catalyst B) were carried by the honeycomb structure 1A and the plugs 50, such that the amounts of cerium oxide and active alumina carried were the same as in the catalyst A, and that the amount of Pt carried was 4g/L. Pt, cerium oxide and active alumina (catalyst C) were carried by the honeycomb structure 1B and the plugs 52, such that the amounts of cerium oxide and active alumina carried were the same as those in the catalysts A and B, and that the amount of Pt carried was 1 g/L. A pressure loss test and a durability test were then conducted in the same manner as in Examples 1-5.

Comparative Example 8

A honeycomb filter having a diameter of 267 mm and a total length of 304.8 mm, whose cell walls had a pitch of 1.5 mm, a thickness of 0.3 mm and a porosity of 65%, was produced with exhaust-gas-inlet-side plugs at positions 91.4 mm inward from the filter end in the same manner as in Comparative Example 3. A catalyst in the same composition and amount as in Example 7 was carried by the exhaust-gas-inlet-side cell walls 31, the plugs 50, the exhaust-gas-outlet-side cell walls 32 and the plugs 52 of this honeycomb filter. A pressure loss test and a durability test were conducted in the same manner as in Examples 1-5. The weight of the catalyst carried by the honeycomb filter is shown in Table 2 as a relative value to that in Example 6.

Examples 8-12

Honeycomb structures 1A having a diameter of 267 mm and various total lengths, whose cell walls had a pitch of 1.5 mm, a thickness of 0.3 mm and a porosity of 65%, and honeycomb structures 1B having a diameter of 267 mm and various total lengths, whose cell walls had a pitch of 1.5 mm, a thickness of 0.3 mm and a porosity of 65%, were produced in the same manner as in Example 6. The honeycomb structures 1A and 1B were integrally connected by inlet-side plugs 50 with a gap 54 of 0.5-12 mm, such that their flow paths were sealed in a checkerboard pattern, and the end 13 of the honeycomb structure 1B was sealed alternately with the inlet-side plugs 50.
A catalyst in the same composition and amount as in Example 7 was carried by the honeycomb structure 1A, the plugs 50, the honeycomb structure 1B and the plugs 52.

With respect to each honeycomb filter, a pressure loss test and a durability test were conducted in the same manner as in Examples 1-5. Highpressure water of 2 MPa was injected into the honeycomb filter through the exhaust-gas-inlet-side end 12 to evaluate the bonding strength of the inlet-side plugs 50 to the cell walls 31, 32. The evaluation was "Good" when the percentage of the inlet-side plugs 50 peeled from the cell walls 31, 32 was less than 1%, "Fair" when it was 1% or more and less than 5%, and "Poor" when it was 5% or more. The results are shown in Table 2 in the column of "Sealing Pressure Test."

Example 13

A honeycomb structure 1A having a diameter of 267 mm and a total length of 96.9 mm, whose cell walls had a pitch of 1.5 mm, a thickness of 0.3 mm and a porosity of 65%, and a honeycomb structure 1B having a diameter of 267 mm and a total length of 206.9 mm, whose cell walls had a pitch of 1.5 mm, a thickness of 0.3 mm and a porosity of 65%, were produced in the same manner as in Example 6. The honeycomb structures 1A and 1B were integrally connected by inlet-side plugs 50 with a 1-mm gap 54, such that the flow paths were sealed in a checkerboard pattern. The flow paths of the honeycomb structure 1B were sealed at the other end 13 alternately with the inlet-side plugs 50. Pt, cerium oxide and active alumina (catalyst D) were carried by the honeycomb structure 1A and the plugs 50, such that the amounts of cerium oxide and active alumina were the same as in the catalysts A, B and C, and that the amount of Pt carried was 3 g/L. A catalyst E comprising lanthanum, cesium and vanadium oxide was carried by the honeycomb structure 1B and the plugs 52. A pressure loss test, a durability test, and a sealing pressure test of the exhaust gas inlet-side plugs to the cell walls were conducted in the same manner as in Examples 8-12.

Comparative Example 9

A honeycomb filter having a diameter of 267 mm and a total length of 304.8 mm, whose cell walls had a pitch of 1.5 mm, a thickness of 0.3 mm and a porosity of 65%, was produced with exhaust-gas-inlet-side plugs at positions 91.4 mm inward from the filter end in the same manner as in Comparative Example 8. After a catalyst in the same composition and amount as in Example 13 was carried by the exhaust-gas-inlet-side cell walls 31, the plugs 50, the cell walls 32 and the plugs 52 of this honeycomb filter, a pressure loss test, a durability test and a sealing pressure test of the exhaust gas inlet-side plugs to the cell walls were conducted in the same manner as in Examples 8-12.

Each ceramic honeycomb filter of Examples 1-13 and Comparative Examples 1-9 was heated from room temperature to a predetermined temperature in an electric furnace, kept at the predetermined temperature for 2 hours, and taken out of the electric furnace to observe whether or not it was cracked. The lower limits of temperatures at which cracking occurred are shown in Tables 1 and 2 as heat-shock-resistant temperatures.

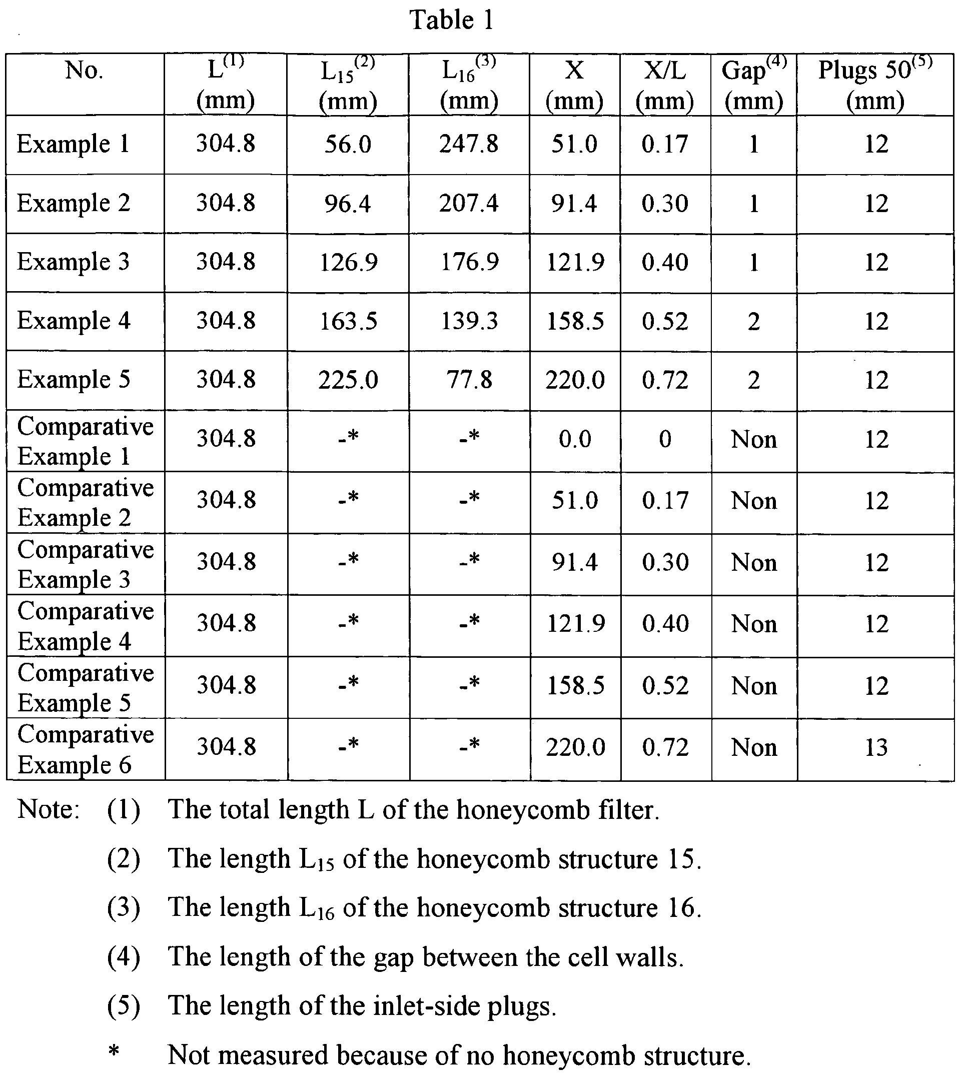

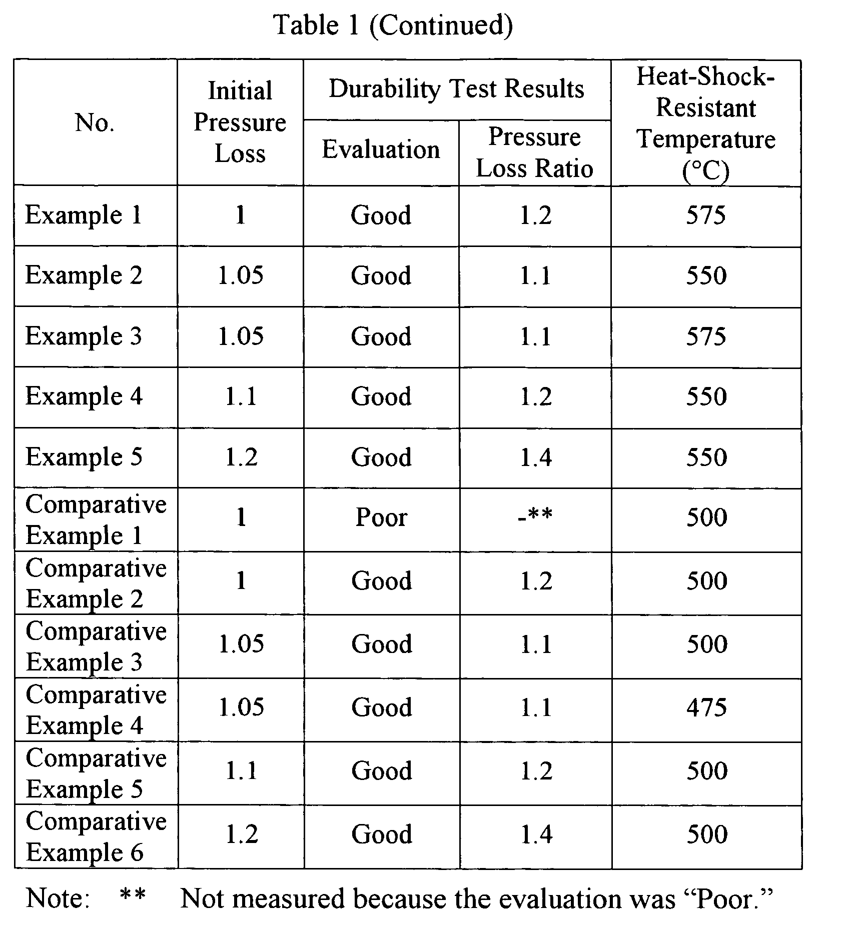

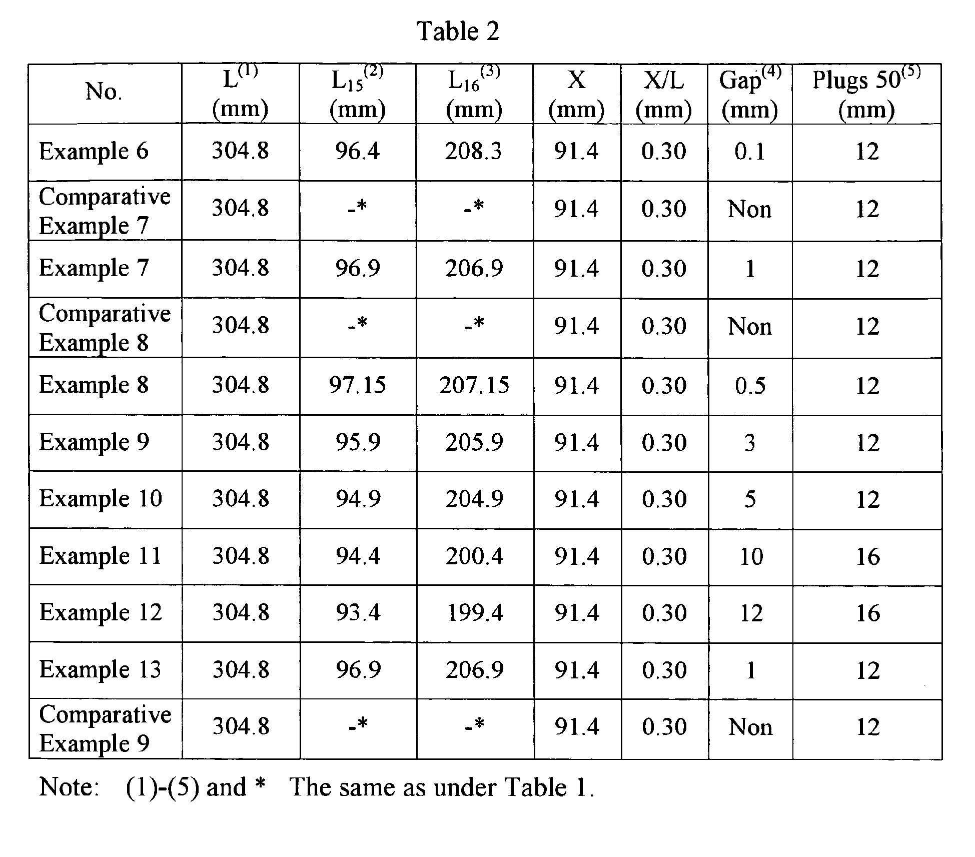

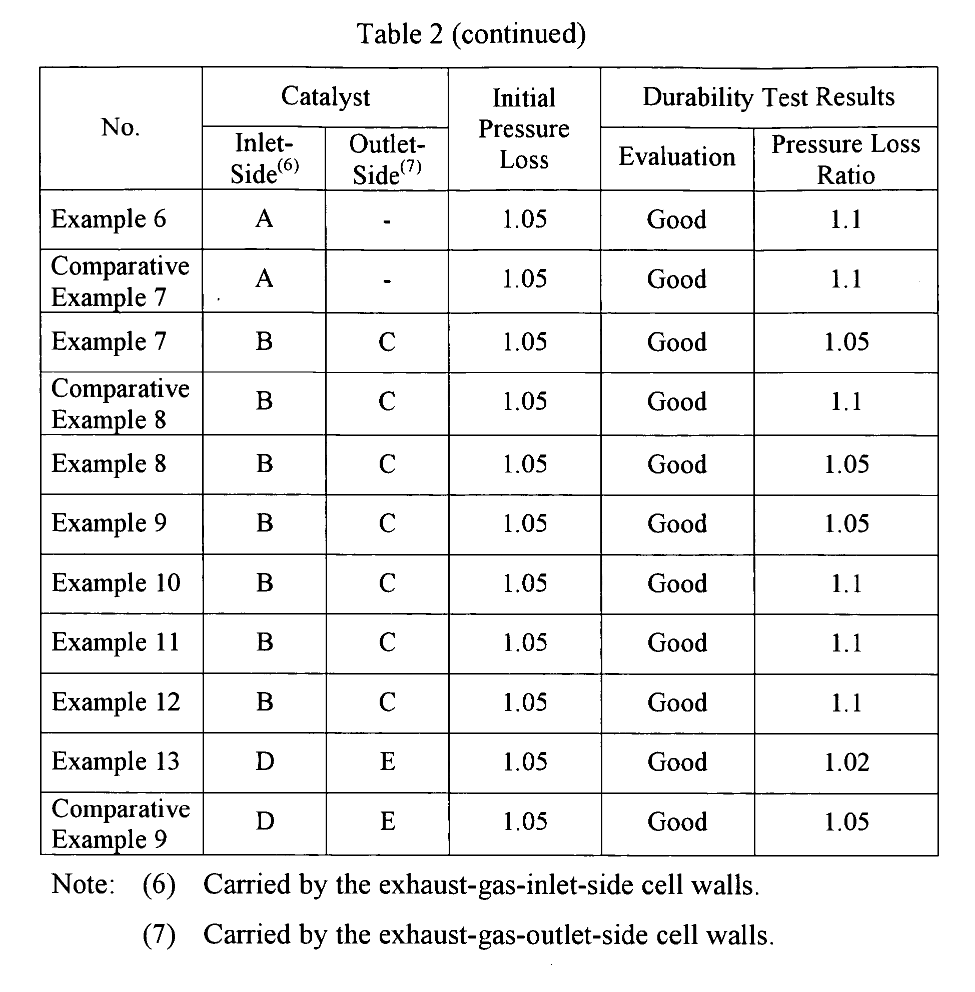

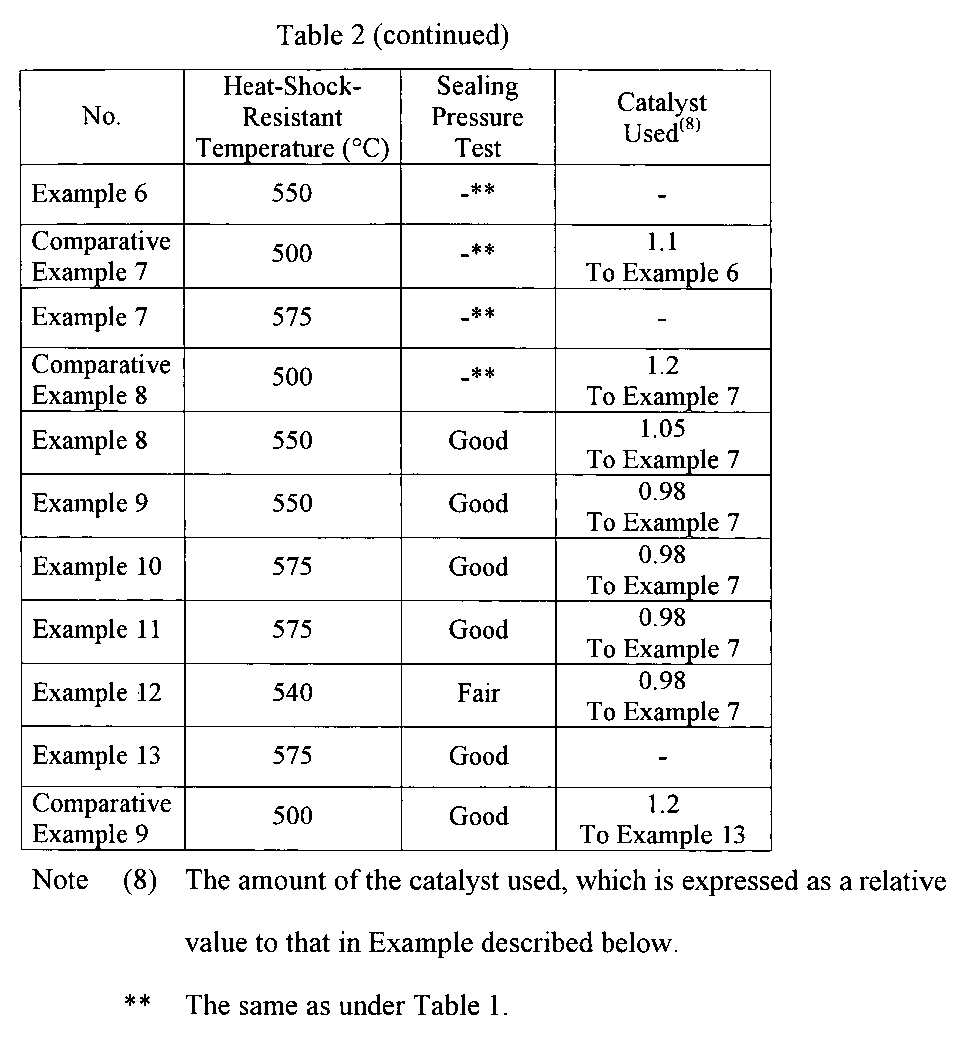

The initial pressure losses of the honeycomb filters of Examples 1-5 were about 1-1.2 times that of the conventional ceramic honeycomb filter of Comparative Example 1. In the durability test corresponding to 10,000-km driving, all filters were evaluated as "Passed (Good)," and their pressure loss ratios were 1.1-1.4, indicating less likelihood of pressure loss increase. Further, the heat-shock-resistant temperatures were 550-575°C, indicating excellent heat shock. Among them, Examples 2 and 3 suffered only small initial pressure loss, which was still small after the durability test, because the ratio X/L of the distance X of the inlet-side plugs 50 to the total length L was 0.2-0.4. This confirms that X/L is preferably 0.2-0.4.

In the durability test corresponding to 10,000-km driving, the honeycomb filter of Comparative Example 1 suffered drastically increased discharge pressure in a time period corresponding to about 5,000-km driving, so that the test was stopped because regeneration could not be conducted. Thus, its evaluation was "Failed (Poor)."

The honeycomb filters of Comparative Examples 2-6 were substantially the same as those of Examples 1-5 in initial pressure loss and the results of the durability test corresponding to 10,000-km driving. This appears to be due to the fact that the inlet-side plugs were disposed separate from the exhaust-gas-inlet-side ends, and that the catalyst was carried by the cell walls and/or the plugs. However, their heat-shock-resistant temperatures were 475-500°C, lower than those of Examples 1-5. This appears to be due to the fact that there was no gap between the exhaust-gas-inlet-side cell walls and the exhaust-gas-outlet-side cell walls.

The initial pressure loss of the honeycomb filter of Example 6 was 1.05 times that of the ceramic honeycomb filter of Comparative Example 1. Also, in the durability test corresponding to 10,000-km driving, all tests were evaluated as "Passed (Good)," and the pressure loss ratio was 1.1, indicating less likelihood of pressure loss increase. Further, the heat shock-resistant temperature was 550°C, indicating excellent heat shock.

Although the honeycomb filter of Comparative Example 7 was good in any of the initial pressure loss, the durability test corresponding to 10,000-km driving, and the pressure loss ratio, its heat-shock-resistant temperature was as low as 500°C, lower than Example 6, and the amount of the catalyst used was 1.1 times that in Example 6, meaning that it disadvantageously used an expensive catalyst in a large amount. This appears to be due to the fact that there was no gap between the exhaust-gas-inlet-side cell walls and the exhaust-gas-outlet-side cell walls.

The initial pressure loss of the honeycomb filter of Example 7 was 1.05 times that of the honeycomb filter of Comparative Example 1. Also, in the durability test corresponding to 10,000-km driving all tests were evaluated as "Passed (Good)," and the pressure loss ratio was 1.05, indicating less likelihood of pressure loss increase. Because the exhaust-gas-inlet-side cell walls had a higher concentration of platinum than in the honeycomb filter of Example 2, the burning oxidation reaction of an unburned fuel, etc. was accelerated in this area, resulting in small pressure loss in the durability test. Further, the heat-shock-resistant temperature was 570°C, indicating excellent heat shock.

Although the honeycomb filter of Comparative Example 8 was good in any of the initial pressure loss, the durability test corresponding to 10,000-km driving and the pressure loss ratio, its heat-shock-resistant temperature was as low as 500°C, lower than Example 7, and the amount of the catalyst used was 1.2 times that in Example 7, meaning that it disadvantageously used an expensive catalyst in a large amount. This appears to be due to the fact that there was no gap between the exhaust-gas-inlet-side cell walls and the exhaust-gas-outlet-side cell walls.

The initial pressure losses of the honeycomb filters of Examples 8-12 were 1.05 times that of the ceramic honeycomb filter of Comparative Example 1. Also, in the durability test corresponding to 10,000-km driving, all tests were evaluated as "Passed (Good)," and the pressure loss ratio was 1.05-1.1, indicating less likelihood of pressure loss increase. While the honeycomb filters of Examples 8-11 were evaluated as "Good" in the sealing pressure test, the honeycomb filter of Example 12 was evaluated as "Fair." It was found that the bonding length of the plugs to the cell walls was preferably 2 mm or more.

The initial pressure loss of the ceramic honeycomb filter of Example 13 was 1.05 times that of the honeycomb filter of Comparative Example 1. Also, in the durability test corresponding to 10,000-km driving, all tests were evaluated as "Passed (Good)," and the pressure loss ratio was 1.02, indicating less likelihood of pressure loss increase. The pressure loss ratio in the durability test was lowest as 1.02, and the heat-shock-resistant temperature was 575°C, indicating excellent heat shock. This appears to be due to the fact that the catalyst for accelerating the oxidation reaction of a fuel was carried by the exhaust-gas-inlet-side cell walls, and the catalyst for accelerating the burning of particulate matter was carried by the exhaust-gas-outlet-side cell walls.

Although the honeycomb filter of Comparative Example 9 was good in any of the initial pressure loss, the durability test corresponding to 10,000-km driving and the pressure loss ratio, its heat-shock-resistant temperature was as low as 500°C, and the amount of the catalyst used was 1.2 times that in Example 13, meaning that it disadvantageously used an expensive catalyst in a large amount. This appears to be due to the fact that there was no gap between the exhaust-gas-inlet-side cell walls and the exhaust-gas-outlet-side cell walls.

### EFFECT OF THE INVENTION

Because the ceramic honeycomb filter of the present invention is constituted by pluralities of porous ceramic honeycomb structures whose cell walls are connected by plugs with a gap in a flow path direction, it is unlikely to be broken even when exposed to high temperatures during operation. Accordingly, the filter temperature can be sufficiently elevated to fully activate a catalyst carried by the cell walls of the honeycomb structures and the plugs, so that particulate matter accumulated in the pores of the cell walls, etc. can be burned. Thus, the clogging of the pores of the cell walls can be prevented while avoiding the breakage and meltdown of the filter, thereby preventing pressure loss from increasing for a long period of time.

The exhaust gas-cleaning apparatus of the present invention comprises the ceramic honeycomb filter and a means for adding a fuel to an exhaust gas to burn particulate matter contained in the exhaust gas by the action of a catalyst. Because the fuel-adding means is disposed upstream of the ceramic honeycomb filter, the temperature of the entire honeycomb filter is elevated, so that the catalyst carried by the honeycomb filter is sufficiently activated to burn particulate matter efficiently. In addition, because the ceramic honeycomb filter is constituted by pluralities of porous ceramic honeycomb structures whose cell walls are connected with a gap, it is unlikely to be broken by thermal expansion.

In the exhaust gas-cleaning method of the present invention, the ceramic honeycomb filter of the present invention is used, a fuel being added to an exhaust gas upstream of the honeycomb filter. A catalyst carried by the honeycomb filter is activated by a fuel added on the upstream side, and the temperature of the honeycomb filter is elevated. Because a high-temperature exhaust gas flows downstream, a catalyst carried by the downstream side of the honeycomb filter can be activated to burn particulate matter contained in the exhaust gas sufficiently, thereby preventing pressure loss increase.

## Claims

1. A ceramic honeycomb filter comprising pluralities of porous ceramic honeycomb structures each having large numbers of flow paths partitioned by cell walls, which are connected to each other in a flow path direction, desired flow paths being sealed such that an exhaust gas passes through pores in said cell walls, the cell walls of at least one honeycomb structure being connected by plugs to those of a honeycomb structure adjacent thereto with a gap in the flow path direction, and a catalyst being carried by at least part of said cell walls and/or said plugs.

2. The ceramic honeycomb filter according to claim 1, wherein said gap is 0.1-10 mm.

3. The ceramic honeycomb filter according to claim 1 or 2, wherein said catalyst is carried by at least part of the cell walls of said porous ceramic honeycomb structure on the exhaust gas inlet side from said plugs.

4. The ceramic honeycomb filter according to any one of claims 1-3, wherein catalysts having different properties are carried by at least part of said cell walls on the exhaust gas inlet side from said plugs, and at least part of said cell walls on the exhaust gas outlet side.

5. The ceramic honeycomb filter according to any one of claims 1-4, wherein the ends of said plugs connecting pluralities of said porous ceramic honeycomb structures are located in a region 0.5 times or less as long as the total length of said ceramic honeycomb filter from the inlet end of said ceramic honeycomb filter.

6. An exhaust gas-cleaning apparatus comprising (a) a ceramic honeycomb filter comprising pluralities of porous ceramic honeycomb structures each having large numbers of flow paths partitioned by cell walls, which are connected to each other in a flow path direction, desired flow paths being sealed such that an exhaust gas passes through pores in said cell walls, the cell walls of at least one honeycomb structure being connected by plugs to those of a honeycomb structure adjacent thereto with a gap in the flow path direction, and a catalyst being carried by at least part of said cell walls and/or said plugs, and (b) a fuel-adding means disposed upstream of said ceramic honeycomb filter.

7. A method for cleaning an exhaust gas by using a ceramic honeycomb filter having large numbers of flow paths partitioned by cell walls, through which the exhaust gas is caused to flow, the cell walls of at least one honeycomb structure in said ceramic honeycomb filter being connected by plugs to those of a honeycomb structure adjacent thereto with a gap in the flow path direction, desired flow paths being sealed, a catalyst being carried by at least part of said cell walls and/or said plugs, the method comprising adding a fuel to said exhaust gas on the upstream side of said ceramic honeycomb filter, such that plugs in said ceramic honeycomb filter, and at least part of a porous ceramic honeycomb structure on the exhaust gas outlet side from said plugs are subjected to the lower limit of a temperature activating said catalyst or higher.
